# EUROPEAN PATENT SPECIFICATION

(11) **EP 2 857 106 B1**
(45) Date of publication and mention of the grant of the patent: **02.08.2017**
(21) Application number: 13800644.0
(22) Date of filing: 04.06.2013
(51) Int. Cl.: B04B 1/20, B04B 13/00, C02F 11/12

(54) **CENTRIFUGAL SEPARATION DEVICE**
ZENTRIFUGALABSCHEIDUNGSVORRICHTUNG
DISPOSITIF DE SÉPARATION CENTRIFUGE

(30) Priority: 05.06.2012 JP 2012127772; 18.12.2012 JP 2012275291
(43) Date of publication of application: 08.04.2015
(73) Proprietor: TOMOE Engineering Co., Ltd., Shinagawa-ku, Tokyo 141-0032 (JP)
(72) Inventor: KISHIGAMI, Takayuki, Tokyo 141-0032 (JP)
(74) Representative: Vossius & Partner Patentanwälte Rechtsanwälte mbB
(86) International application number: PCT/JP2013/003516
(87) International publication number: WO 2013/183287

(56) References cited:
- JP-A- H08 332 413
- JP-A- H10 128 158
- JP-A- H10 151 370
- JP-A- H10 337 598
- JP-A- H11 207 211
- JP-A- 2001 087 799
- JP-A- 2011 230 040
- US-A- 4 369 915
- US-A- 4 432 747

## Description

### Technical Field

The present invention relates to a centrifugal separation device having a bowl and a screw conveyor, and more particularly to a centrifugal separation device that has a function of controlling the centrifugal force of the bowl in accordance with the conveyance torque of the screw conveyor.

### Background Art

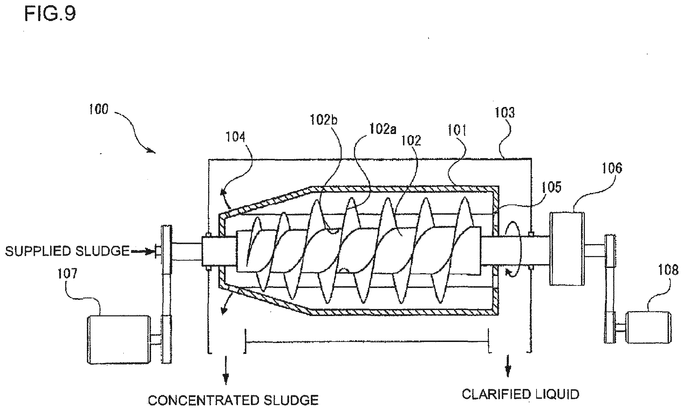

A centrifugal separation device referred to as "decanter centrifuge" is known as a device that separates solids from liquids by using centrifugal force (see, for example, Patent Literature 1) . FIG. 9 shows the schematic structure of a horizontal decanter centrifuge. The horizontal decanter centrifuge 100 is configured, as shown in FIG. 9, to have a bowl 101 that is rotatable around a horizontal axis, and a screw conveyor 102 arranged on the same rotating shaft inside this bowl 101, both accommodated in a casing 103.

The bowl 101 that applies centrifugal forces to the liquid to be treated that contains solids is formed conical at one end. This conical-shaped portion forms a beach section where solids transferred by the screw conveyor 102 separate from a liquid pool, and has a solids outlet 104 at the distal end. The body part of the bowl 101 forms the liquid pool (pool section) of the liquid being fed into and treated in the bowl 101 and has a clarified liquid outlet 105 in the end face at the other end. On the other hand, the body part of the screw conveyor 102 has a spiral screw blade 102a and an orifice 102b for supplying the liquid to be treated into the bowl.

In such a configuration, when liquid to be treated is continuously supplied into the rotating bowl 101, solids deposit on the circumferential wall of the bowl 101 by the effect of centrifugal forces. As the screw conveyor 102 rotates at a differential speed relative to the bowl 101 by means of a gear box 106, the solids are transferred toward the beach section. Solids separated from the liquid at the beach section then exit from the solids outlet 104. The liquid from which solids have been separated (clarified liquid) overflows and exits from the clarified liquid outlet 105.

The bowl 101 is rotated by a main drive motor 107. The main drive motor 107 controls the rotational speed (N) of the bowl 101 by inverter control. The screw conveyor 102, on the other hand, is configured such that its rotational speed is controlled by the gear box 106 and a back drive motor 108 so that it rotates at a differential speed (ΔN) relative to the bowl 101.

How a differential speed is produced in the configuration described above will be explained. When the bowl 101 containing the liquid to be treated is rotated by the main drive motor 107, the screw conveyor 102 tries to rotate with the bowl 101 at the same speed because of the effects of friction, fluid resistance, and others. The back drive motor 108 applies a brake to the screw conveyor 102 so that it rotates at a slower speed than the bowl 101 since, if they rotated at the same speed, solids would not be conveyed toward the beach section. Regenerative power generated by the application of brake is consumed by the main drive motor 107, thereby achieving energy saving in the device.

In the conventional practice, the device is operated either such that the rotational speed (N) of the bowl 101 and the differential speed (ΔN) are both maintained constant, or, as with a decanter centrifuge 100 disclosed in Patent Literature 2, the level of differential speed (AN) is controlled in accordance with the measured conveyance load (torque) of the screw conveyor 102. Namely, the device is conventionally operated such that the rotational speed (N) of the bowl 101 is kept constant.

### Citation List

### Patent Literature

Patent Literature 1: Japanese Patent Application Laid-Open No. 2011-230040
Patent Literature 2: Japanese Patent Application Laid-Open No. Hei. 8-332413

### Summary of Invention

### Technical Problem

However, the properties of the liquid being fed to be treated (in particular, concentration of solids) are not necessarily continuously constant and may vary. In particular, if the liquid to be treated is sludge produced during sewage treatment or the like, the concentration of solids (sludge concentration) varies depending on various factors such as precipitation. In the conventional practice, the rotational speed of the bowl 101 is either intentionally set constant, or is inevitably kept constant because of the structure as in Patent Literature 2, so that, in some cases, the device may be operated with a centrifugal force (G) that is not appropriate for the properties (in particular, concentration of solids) of the liquid being fed to be treated. In such cases, the solids (or concentrated sludge in the case of sludge) discharged from the bowl 101 may have a water content that falls out of a target range, or electric power may be consumed unnecessarily, leading to an increase in running cost.

The present invention was made to solve the problems mentioned above as an example, and an object thereof is to provide a centrifugal separation device that can be operated stably even though the properties of the liquid to be treated (in particular, concentration of solids) may change, and that can be operated in an energy saving manner with reduced unnecessary power consumption.

### Solution to Problem

The centrifugal separation device of the present invention includes a bowl for separating solids from a liquid to be treated by applying a centrifugal force, a screw conveyor for conveying the solids inside the bowl toward a discharge port, a drive motor for rotating the bowl, and a differential speed generating device for rotating the screw conveyor at a differential speed relative to the bowl, and is characterized in that it includes a control device having information on a range of target torque setting values of conveyance torque corresponded to target water content ratios, and information on a range of operable differential speeds between the screw conveyor and the bowl that is necessary for causing the conveyance torque to fall within the range of target torque setting values, wherein, when the conveyance torque during execution of centrifugal separation is out of the range of target torque setting values and when the differential speed continues to be an operable upper differential speed limit or an operable lower differential speed limit, which are boundary values of the range of operable differential speeds, for a predetermined period of time, the control device changes a magnitude of centrifugal force of the bowl stepwise upward or downward so that the conveyance torque falls within the range of target torque setting values.

Preferably, the control device has information on a range of torque limits that is wider than the range of target torque setting values, and, when the conveyance torque during execution of centrifugal separation is between an upper setting limit of the target torque setting values and an upper torque limit that is an upper limit of the torque limits and when the differential speed continues to be an operable lower differential speed limit for a predetermined period of time, the control device performs a first operation of lowering centrifugal force for lowering centrifugal force; when the conveyance torque during execution of centrifugal separation is equal to or higher than the upper torque limit and when the differential speed continues to be an operable lower differential speed limit for a predetermined period of time, the control device performs a second operation of lowering centrifugal force for lowering centrifugal force more largely than the first operation of lowering centrifugal force; when the conveyance torque during execution of centrifugal separation is between a lower setting limit of the target torque setting values and a lower torque limit that is a lower limit of the torque limits and when the differential speed continues to be an operable upper differential speed limit for a predetermined period of time, the control device performs a first operation of raising centrifugal force for raising centrifugal force; and when the conveyance torque during execution of centrifugal separation is equal to or lower than the lower torque limit and when the differential speed continues to be an operable upper differential speed limit for a predetermined period of time, the control device performs a second operation of raising centrifugal force for raising centrifugal force more largely than the first operation of raising centrifugal force. The range of operable differential speeds is preferably set correspondingly to each stage of centrifugal force that is changed stepwise and, when the control device changes the magnitude of centrifugal force of the bowl stepwise, the control device preferably sets an operable upper differential speed limit and an operable lower differential speed limit corresponding to a changed centrifugal force of the bowl. Also preferably, the control device executes control of stopping supply of the liquid to be treated to the bowl after starting an operation of raising the centrifugal force of the bowl until the changed centrifugal force is reached.

### Advantageous Effect of Invention

According to the present invention, in a centrifugal separation device that includes a bowl for separating solids from a liquid to be treated by applying a centrifugal force, a screw conveyor for conveying the solids inside the bowl toward a discharge port, a drive motor for rotating the bowl, and a differential speed generating device for rotating the screw conveyor at a differential speed relative to the bowl, the device includes a control device for automatically controlling the magnitude of the centrifugal force of the bowl in accordance with changes in the conveyance torque of the screw conveyor, whereby centrifugal separation can be performed with an appropriate centrifugal force in accordance with changes in the properties (in particular, concentration of solids) of the liquid to be treated. As a result, the water content of solids (cake, in the case of sludge) is prevented from falling out of a target range, and energy-saving operation that consumes less unnecessary electric power can be realized.

### Brief Description of Drawings

FIG. 1 is a diagram showing the overall structure of a decanter centrifuge according to a reference example of the present invention.
FIG. 2 is a partial enlarged view of the decanter centrifuge (short cone).
FIG. 3 is a partial enlarged view of the decanter centrifuge (axial conveyor).
FIG. 4 is a list of setting values for automatic control executed by the decanter centrifuge.
FIG. 5 shows experimental results carried out to confirm the effects of the invention.
FIG. 6 is a graph of conveyance torque and differential speed in a first embodiment.
FIG. 7 shows various setting values stored in the memory.
FIG. 8 is a flowchart for explaining the method of centrifugal separation of sludge.
FIG. 9 is a schematic diagram illustrating a conventional decanter centrifuge.

### Description of Embodiments

Hereinafter, a centrifugal separation device according to a preferred embodiment of the present invention will be described in the form of a horizontal decanter centrifuge for sludge treatment as one example. It should be noted that an embodiment described below is not to be interpreted as limiting the technical scope of the present invention in any way.

### (Reference Example)

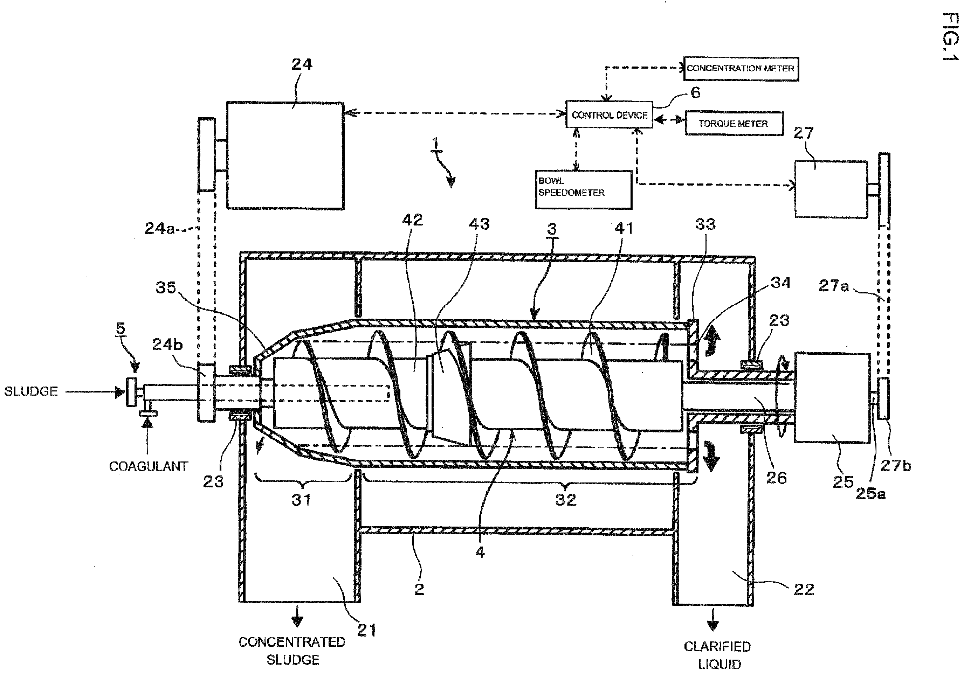

The decanter centrifuge 1 according to this reference example includes, as shown in FIG. 1, a casing 2 having a solids outlet 21 and a clarified liquid outlet 22 each formed on the underside, a bowl 3 that forms a rotating cylindrical member arranged inside the casing 2, and a screw conveyor 4 as conveyor means of solids subjected to centrifugal forces inside the bowl 3. The bowl 3 is supported by a bearing mechanism 23 such as a bearing or the like, attached for example to the casing 2, while the screw conveyor 4 is supported by a conveyor bearing (not shown) such that the bowl 3 and the screw conveyor 4 can each rotate independently around a horizontal axis.

Power from a drive motor 24, which is a driving mechanism, is transmitted via a rotating belt 24a to a pulley 24b on the bowl 3 side, so that the bowl 3 rotates at a predetermined rotational speed, and the power is also transmitted to the screw conveyor 4 via a differential speed generating mechanism 25 and a spline shaft 26, so that the bowl 3 and screw conveyor 4 rotate at differential speeds relative to each other. A planetary gear train, for example, may be used as the differential speed generating mechanism.

A drive motor called a "back drive motor" 27 is coupled to a rotating shaft 25a of the differential speed generating mechanism 25 via a rotating belt 27a and a pulley 27b. The back drive motor 27 is used for applying a brake so that the screw conveyor 4 rotates more slowly than the bowl 3 by using the torque given by the rotating belt 27a as it runs around the rotating shaft of the motor. Regenerative power generated in the motor 27 by the application of brake is supplied to the drive motor 24, thereby to reduce power consumption of the entire device. The back drive motor 27 may not be provided if the differential speed generating mechanism 25 produces a differential speed only by setting gear ratios.

The decanter centrifuge 1 further includes a feed nozzle 5 for feeding sludge, which is a liquid to be treated, and a coagulant into the bowl 3. The feed nozzle 5 has a double pipe structure, for example, having passages allocated for sludge and coagulant inside and outside, respectively. Sludge is a sludge produced by the treatment of wastewaters such as water and sewage, industrial wastewater, human waste, and the like, and has a water content of about 95 to 99.5%. For the coagulant, a polymer coagulant is used, for example.

The body part of the bowl 3 has a conical part 31 at one end, and a cylindrical part 32 at the other end. An opening at the other end is closed by a member called "front hub" 33 which is circular in plan view. The front hub 33 and the cylindrical part 32 form a pool section (liquid pool) for sludge fed into the bowl 3 to accumulate. A clarified liquid discharge port 34 is formed in the front hub 33, and sludge is continuously fed into the bowl 3 to cause clarified liquid to overflow from the discharge port 34.

The conical part 31 of the bowl 3, on the other hand, forms a beach section where concentrated sludge (i.e., sludge being dewatered) transferred by the screw conveyor 4 separates from the pool section, and a discharge port 35 for concentrated (or dewatered) sludge is formed at the distal end of the beach section. The beach section has a function of applying an increased compressive force from the screw blade 41 on the sludge by causing the concentrated sludge to slip on its inclined surface, as well as a function of increasing residence time of the sludge by making the effective volume of the pool section larger. In a decanter centrifuge 1 designed for low power applications or high dewatering performance, its beach section has a two-step structure wherein the inclination angle changes near the center. Making the slope on the distal end side steep as in the beach section of FIG. 1 provides the effect of further increasing the compressive force of the screw blade 41 and the residence time of sludge. However, the slope may be made gentle on the distal end side, and the beach section need not necessarily have a two-step structure. Note, also, that this reference example is applicable to a bowl 3 that does not have a conical part 31 and is formed only by a cylindrical part 32.

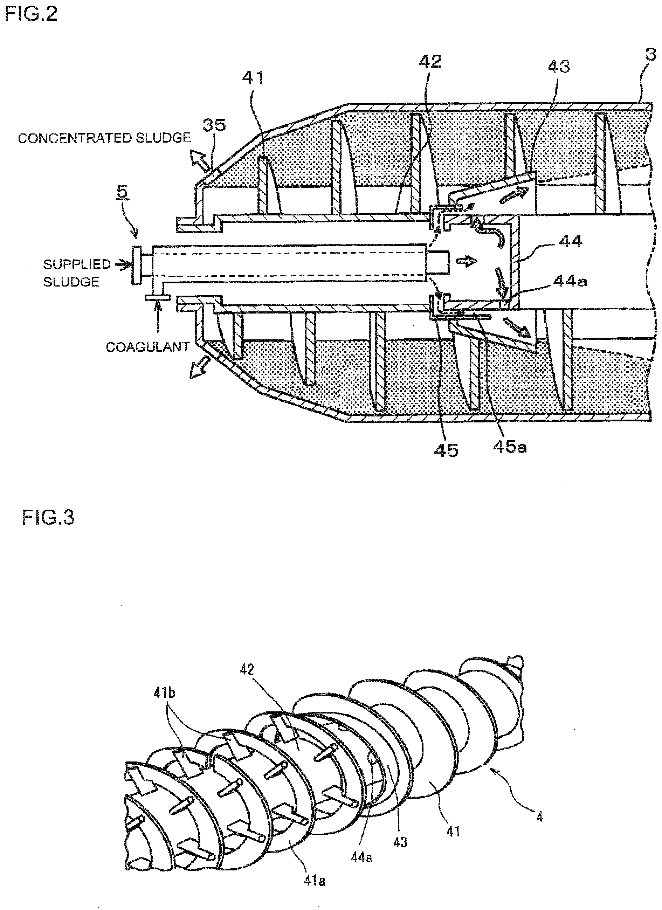

The screw blade 41 for conveying and compressing the sludge inside the bowl 3 is formed on the outer circumferential surface of the body part 42 of the screw conveyor 4 in a spiral shape. The body part 42 of the screw conveyor 4 has a cavity (buffer part) inside as shown in FIG. 2, and the tip of the feed nozzle 5 extends into this buffer part. When sludge is fed from the feed nozzle 5 into the buffer part, it is delivered into the bowl 3 via a short cone 43 formed near the center of the body part 42 by the effect of centrifugal forces. Coagulant, too, is supplied into the short cone 43 from a different path from the sludge as shown in the drawing, and mixed with the sludge inside the short cone 43 and delivered into the bowl 3. Since the sludge and coagulant are efficiently reacted to each other in the inner region of the short cone 43 and swiftly delivered into the centrifugal force field, a low chemical dosing rate of coagulant can be achieved. Also, as the sludge is delivered into the centrifugal force field along the short cone 43, the sludge layer inside the bowl 3 is not stirred, so that higher separation performance can be achieved. Note, the coagulant need not necessarily be dosed, and the equipment for chemical dosing may be omitted.

For the screw conveyor 4, preferably, an axial conveyor is used, which has openings in the screw blade 41 for allowing clarified liquid to flow along the axial direction of the screw conveyor 4. By using the axial conveyor, clarified liquid flows linearly through the openings and along the axial direction of the screw conveyor 4, rather than spirally along the grooves between the screw blade 41, toward the clarified liquid discharge port 34. Creating such a flow lowers the linear speed of clarified liquid inside the bowl 3, and as the liquid flows without stirring the sludge layer, a low chemical dosing rate can be achieved.

FIG. 3 shows one example of an axial conveyor. This axial conveyor, as shown in FIG. 3, has a screw blade 41, from the short cone 43 to the clarified liquid discharge port 34, formed by a spiral strip-like member 41a fixed with radially located support members 41b such as to be separated from the body part of the screw conveyor 4 so that openings are formed.

Referring back to FIG. 1, the decanter centrifuge 1 has a bowl speedometer for measuring the rotational speed of the bowl 3. As one example, a non-contact rotation sensor may be employed as the bowl speedometer. The centrifugal force (G) the bowl 3 imparts to the liquid to be treated can be calculated by a math formula: G = r × ω2/g = (r × N2)/894, where N is the rotational speed of the bowl 3, and r is the radial distance from the rotating shaft (i.e., inner diameter of the bowl). Since the inner diameter (r) of the bowl 3 is already given by the design specifications, a corresponding relationship between the centrifugal force (G) and the rotational speed (N) can be preliminarily determined using the math formula. In this reference example, a setting value of centrifugal force (G) is determined when centrifugal separation is executed, and a process step of determining a setting value of rotational speed (N) corresponding to this centrifugal force (G) is performed. The drive motor 24 is controlled by inverter control, with reference to the measurements from the bowl speedometer, so that the bowl 3 rotates at the determined setting value. The information on the corresponding relationship between the centrifugal force (G) and rotational speed (N) may be stored in a memory or the like in a control device 6 to be described later. The rotational speed of the bowl 3 may also be detected from inverter information (such as frequency) of the drive motor 24 which is controlled by inverter control.

The decanter centrifuge 1 has a torque meter that measures the conveyance torque of the screw conveyor 4. As one example, an output torque monitor of the inverter may be employed as the torque meter. The conveyance torque of the screw conveyor 4 changes in accordance with the concentrated condition of the sludge inside the bowl 3. More particularly, when concentration has gone too far, the conveyance torque increases, as the water content of the sludge inside the bowl 3 is low. On the contrary, when concentration is not sufficient, the conveyance torque decreases, as the water content of the sludge inside the bowl 3 is high. One of the factors that change the condition of the concentrated sludge inside the bowl 3 is a change in the properties (in particular, sludge concentration) of the sludge being supplied (supplied sludge). The properties of supplied sludge change in accordance with variations in the wastewater properties based on precipitation and the like, or operating conditions of the sewage treatment plant.

If the centrifuge is operated with a constant rotational speed (N) of the bowl 3 as was conventionally done, when high-concentration sludge is supplied, it will be concentrated too much inside the bowl 3, and the conveyance torque will increase. As a result, the concentrated sludge may have a water content that is too lower than a target value, and the concentrated sludge may even clog the discharge port 35. Moreover, applying a centrifugal force (G) more than necessary means consuming electrical power more than necessary. On the contrary, when low-concentration sludge is supplied, it may not sufficiently be concentrated inside the bowl 3, and the conveyance torque will decrease. As a result, concentrated sludge with a water content lower than the target value will be discharged to the outside of the machine.

The decanter centrifuge 1 of this reference example includes a control device 6 that changes the magnitude of centrifugal force (G) of the bowl 3 in accordance with changes in the conveyance torque of the screw conveyor 4, in order to stabilize the concentrated condition inside the bowl 3 by applying an appropriate centrifugal force (G) . The control device 6 may be configured by, for example, a computer device having a CPU and a memory. The control device 6 has a sequence program that performs automatic control of centrifugal force (G) to be described later stored in the memory. The control device 6 may further have a sequence program for controlling the overall operation of the decanter centrifuge 1 stored in the memory.

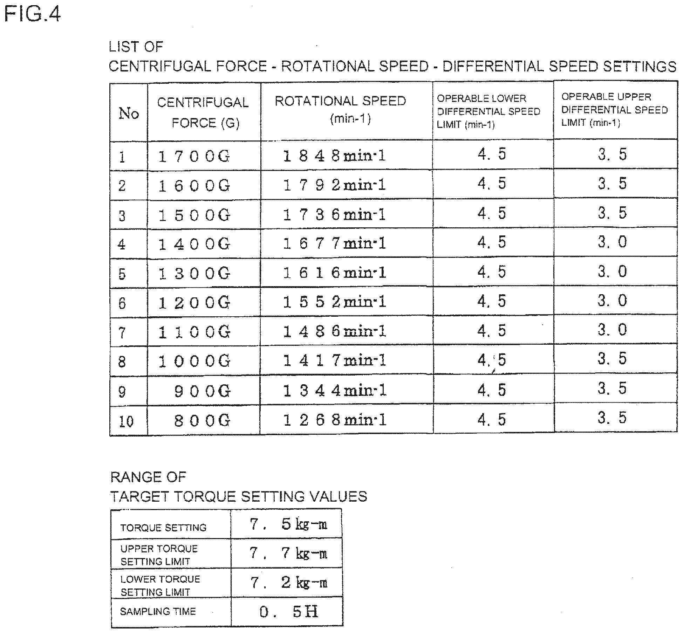

As shown by an example given in FIG. 4, the control device 6 stores information indicative of the corresponding relationship between the centrifugal force (G) and rotational speed (N), and information on operable upper differential speed limits of differential speed (ΔN) and information on operable lower differential speed limits of differential speed (ΔN) corresponding to centrifugal forces (G) in the memory. Since it is preferable to change the centrifugal force stepwise, setting values of centrifugal force (G) in a range of, for example, 800 G to 1700 G divided into 10 stages of 100 G each, and rotational speeds (N), information on operable upper differential speed limits of differential speed (ΔN), and information on operable lower differential speed limits of differential speed corresponding to respective setting values of centrifugal force (G), are stored.

Further, the control device 6 stores information on the range of target setting values of conveyance torque in the memory, as also shown in FIG. 4. The target setting values may be set in a suitable range corresponding to target water contents of sludge to be treated. The range of target setting values may further be corresponded to the types of sludge to be treated. As one preferable example, the target setting may be 7.5 kgf-m, the upper torque setting limit may be 7.7 kgf-m, and the lower torque setting limit may be 7.2 kgf-m. Namely, the difference between the upper torque setting limit and the lower torque setting limit should preferably be 0.5 kgf-m. Setting the difference between the upper torque setting limit and the lower torque setting limit relatively small provides the advantage of grasping the correct trend of centrifugal forces (G). In contrast, if the difference is too large, the operation may lack stability because of large torque fluctuations, and on the contrary, if the difference is too small, the operation may lack stability because of frequent changes in centrifugal force (G).

### (Effect)

Next, the operation of centrifugal separation of sludge using the decanter centrifuge 1 according to this reference example will be described. First, the drive motor 24 is started up, and while the bowl 3 and the screw conveyor 4 are rotated at respective predetermined rotational speeds, sludge and coagulant are supplied into the bowl 3. The setting value of the rotational speed (N) of the bowl 3, and the operable upper differential speed limits and lower differential speed limits of differential speed (ΔN) between the bowl 3 and screw conveyor 4, are each determined based on the setting value of the centrifugal force (G). As one example, the sludge to be supplied is preliminarily analyzed to determine its concentration, and a target value (initial setting value) of centrifugal force (G) is determined on the basis of the analysis results, which is then input to the control device 6 by an operator. The initial setting value should preferably be set low to be increased stepwise to a suitable value of centrifugal force (G) by automatic control. Once the initial setting value is input, the control device 6 reads out a setting value of rotational speed (N), information on an operable upper differential speed limit of differential speed (ΔN) , and information on an operable lower differential speed limit of differential speed (ΔN), corresponding to the initial setting value of centrifugal force (G), from the memory, and determines these setting values of rotational speed (N), operable upper differential speed limit of differential speed (ΔN), and operable lower differential speed limit of differential speed (ΔN) as setting values for control purposes. As one example, if the initial setting value is 1600 G, the setting value of rotational speed (N) is 1792 min⁻¹, the operable upper differential speed limit of differential speed (ΔN) is 3.5 min⁻¹, and the operable lower differential speed limit of differential speed (ΔN) is 4.5 min⁻¹. The rotational speed (N) of the bowl measured by the bowl speedometer is adjusted by inverter control of the drive motor 24 such as to be the same as the setting value. The differential speed, on the other hand, is controlled on the basis of torque output. Sludge may be supplied in an amount of 2 to 50 m³/h, for example. The amount of coagulant added may be adjusted on the basis of the type of added coagulant, and the properties or reactive characteristics of the sludge.

The sludge and coagulant are mixed in the portion of the short cone 43, asmentionedabove. When subjected to the centrifugal forces given by the rotating bowl 3, the sludge with coagulant mixed therein accumulates all around the pool section of the bowl 3, wherein solid materials in the sludge deposit on the inner circumferential surface of the bowl 3 by the difference in specific gravity. The solid materials in the sludge deposited on the inner circumferential surface of the bowl 3 are transferred toward the discharge port 35 by the screw blade 41 of the rotating screw conveyor 4 and separate from the liquid by being pushed up on the beach section. The concentrated sludge separated from the liquid is discharged from the discharge port 35 to the outside of the bowl 3. On the other hand, the clarified liquid overflows from the clarified liquid discharge port 34 as the sludge is fed continuously.

The torque meter continuously measures the conveyance torque of the screw conveyor 4. The control device 6 samples the torque value measured by the torque meter every predetermined interval (of, for example, 30 min) and determines whether it falls within the range of target setting values. If the sumpled torque value is within the range of target setting values, the control device 6 determines that the current centrifugal force (1600 G) is appropriate, and maintains this setting value. Preferably, the conveyance torque should be sampled several times and an average thereof should be used as a reference, since, as is shown in the experimental results to be described later, the conveyance torque changes by the second.

On one hand, if the sampled torque value exceeds the upper torque setting limit (for example, if the torque value is 8. 0 kgf-m), the control device 6 determines that the current centrifugal force (G) is too high and changes the setting value to a new value (1500 G) that is lower by 100 G than the current centrifugal force (G) . Moreover, the control device 6 reads out a setting value of rotational speed (N), information on an operable upper differential speed limit of differential speed (ΔN), and information on an operable lower differential speed limit of differential speed (ΔN) corresponding to the new setting value of centrifugal force (G) from the memory, and changes each of them to new setting values. Change of setting values is completed while the machine keeps operating. Sludge supply may be carried on when the centrifugal force (G) is lowered. Here, the phrase "carrying on sludge supply" means to exclude a condition where sludge supply is completely stopped. The condition in which "sludge supply is carried on" includes a mode that includes periods in which sludge supply is instantaneously stopped when the centrifugal force (G) is lowered.

On the other hand, if the sampled torque value is lower than the lower torque setting limit (for example, if the torque value is 6.5 kgf-m), the control device 6 determines that the current centrifugal force (G) is too low and changes the setting value to anewvalue (1700 G) that is higher by 100 G than the current centrifugal force (G) . Moreover, the control device 6 reads out a setting value of rotational speed (N), information on an operable upper differential speed limit of differential speed (ΔN), and information on an operable lower differential speed limit of differential speed (ΔN) corresponding to the new setting value of centrifugal force (G) from the memory, and changes each of them to new setting values for control purposes. When raising the centrifugal force (G), sludge supply should preferably be stopped during the transition of the rotational speed (N) and differential speed (ΔN) to their new setting values for control purposes. This is because the drive motor 24 may be overloaded and stopped abnormally if centrifugal force (G) is raised while sludge supply is carried on.

The centrifugal force (G) need not necessarily be changed by one stage, and for example, if the difference from the upper torque setting limit (or lower torque setting limit) is large, the setting value may be changed by 2 stages or more. Further, the concentration of supplied sludge may be taken into account in addition to the conveyance torque as the factor on the basis of which the centrifugal force (G) is changed. Herein, the control based on the conveyance torque described above is defined as "auto mode control", while controlling the centrifugal force (G) on the basis of the conveyance torque and the concentration of supplied sludge is defined as "full auto mode control". Full auto mode control further includes control of lowering centrifugal force (G) when the concentration of supplied sludge is high, and control of raising centrifugal force (G) when, on the contrary, the concentration is low, in addition to the control described above. The sludge concentration should preferably be measured continuously by installing a concentration meter.

According to the reference example described above, with the control device 6 that automatically controls the magnitude of the centrifugal force (G) of the bowl 3 in accordance with changes in the conveyance torque of the screw conveyor 4, centrifugal separation is performed with an appropriate centrifugal force in accordance with the change in the properties of the sludge being supplied (concentration of solids). As a result, the concentrated condition in the bowl 3 is made stable, and the water content of the concentrated sludge discharged from the bowl 3 is prevented from falling out of (a specified range of target values). As the centrifugal force (G) is set appropriately, energy-saving operation is realized, with reduced unnecessary consumption of electric power. Note, while the reference example described above employs automatic control by the control device 6, the control may be executed manually by an operator.

Another advantage according to the reference example described above is that, by adopting a control method in which the centrifugal force (G) is changed stepwise, an unattended operation is made possible by complete automation.

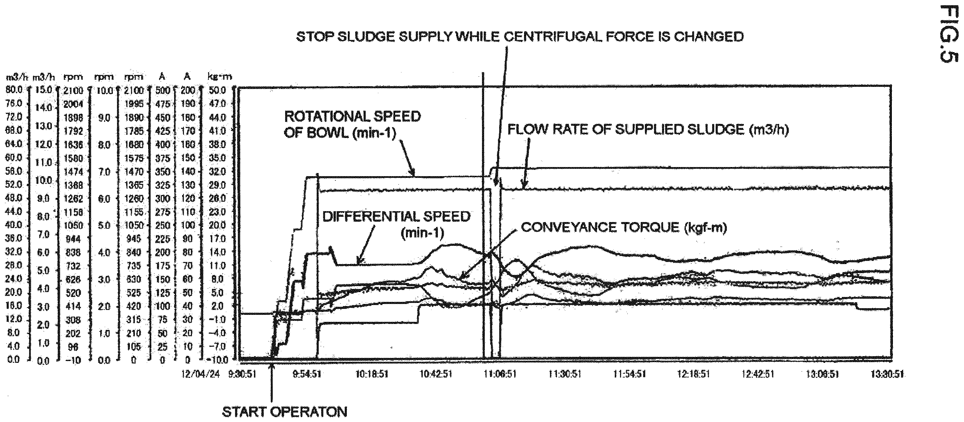

Lastly, trend data obtained when the device was actually operated automatically with the setting values of FIG. 4 is shown in FIG. 5. As is clear from the results in this drawing, the device is automatically operated such that the rotational speed (N) and differential speed (ΔN) are kept close to control target values in accordance with the conveyance torque, i.e., stable operation was realized. Moreover, the water content of the concentrated sludge remained within a target range during the operation period.

### (First Embodiment)

In the reference example, the magnitude of centrifugal force (G) of the bowl 3 was controlled in accordance with changes in the conveyance torque of the screw conveyor 4. In this embodiment, the magnitude of centrifugal force (G) of the bowl 3 is controlled in accordance with not only the changes in the conveyance torque but also the changes in differential speed (ΔN) between the screw conveyor 4 and the bowl 3, so that the device is operated more stably in accordance with the properties of the liquid to be treated and in an energy-saving manner. The decanter centrifuge 1 in this embodiment is configured the same as that of the reference example and therefore will not be described again.

In this embodiment, when the conveyance torque does not fall within the range of target setting values even though the differential speed (ΔN) continues to be a boundary value of an operable differential speed range for a predetermined period of time, it is assumed that the conveyance torque cannot be controlled by controlling the differential speed, and the magnitude of centrifugal force (G) is changed so that the conveyance torque falls within the range of target setting values. This feature will be described in more detail below.

The differential speed (ΔN) can be deduced from a math formula: ΔN = (N1 - N2) / X ... (1), where N1 is the rotational speed of the bowl 3, N2 is the rotational speed of the rotating shaft 25a of the differential speed generating mechanism 25, and X is the speed reduction ratio of the differential speed generating mechanism 25.

Therefore, if the rotational speed N1 of the bowl 3 is constant, the differential speed (ΔN) is reduced by increasing the output of the back drive motor 27, and the differential speed (ΔN) is increased by reducing the output of the back drive motor 27. Since a change in differential speed (ΔN) causes the conveyance torque also to change, there is an appropriate range of differential speed (ΔN) to keep the conveyance torque within the range of target setting values, and this appropriate range corresponds to the "operable differential speed range" mentioned above.

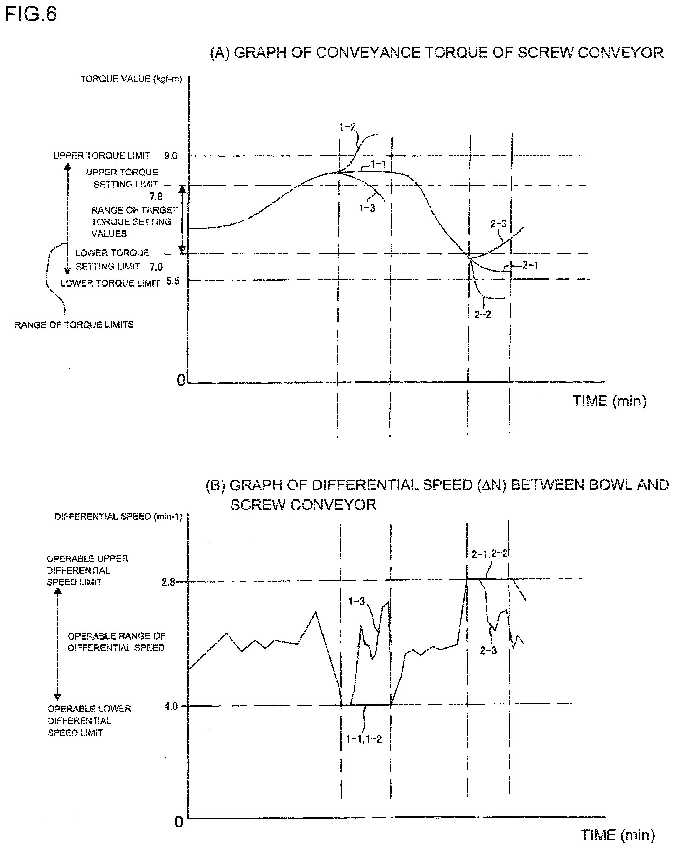

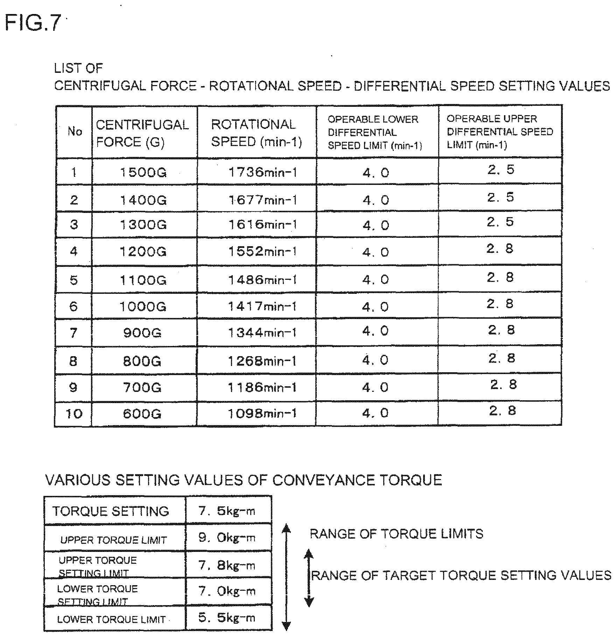

FIG. 6 is a graph for explaining how the centrifugal force (G) of the bowl 3 is controlled. FIG. 6(A) shows changes in the conveyance torque of the screw conveyor 4 (typical example), and FIG. 6(B) shows changes in the differential speed (ΔN) between the bowl 3 and the screw conveyor 4 (typical example) . FIG. 7 is a data table showing various setting values stored in the memory.

In the memory of the control device 6 are stored various setting values to be used for control of the centrifugal force (G) of the bowl 3, as shown in FIG. 7. The centrifugal force (G) of the bowl 3 in the range of 600 G to 1500 G is divided into ten stages of 100 G each, and various setting values are stored each corresponding to each of the stages. Namely, a rotational speed (N) is corresponded to each centrifugal force (G). For example, for a centrifugal force (G) of 1000 G, the corresponding rotational speed (N), operable upper differential speed limit of the differential speed (ΔN), and operable lower differential speed limit of the differential speed (ΔN) are 1417 min⁻¹, 2.8 min⁻¹, and 4.0 min⁻¹, respectively. Note, the operable differential speed range changes depending on the structure of the differential speed generating mechanism 25 and the target water content ratio of sludge, and therefore the values shown in FIG. 7 are one example. Therefore, while the operable lower differential speed limits of the differential speed (ΔN) are all the same in FIG. 7, they may be different. This applies also to the reference example. The operable upper differential speed limit and operable lower differential speed limit respectively correspond to the lower and upper output limits of the back drive motor 27. Namely, as is shown in the math formula (1) mentioned above, an increase in the output of the back drive motor 27 causes the differential speed (ΔN) to decrease, while a decrease in the output of the back drive motor 27 causes the differential speed (AN) to increase. This is why the differential speed value (ΔN) indicated along the vertical axis of FIG. 6 (B) decreases from the lower operable differential speed limit toward the upper operable differential speed limit.

In the memory of the control device 6 are stored information on the range of target torque setting values, and information on the range of torque limits. The target torque setting of the conveyance torque is 7.5 kg-m.

The information that indicates the range of target torque setting values is the same as in the reference example and will not be explained again. As the information on the range of torque limits, an upper torque limit, which is the upper limit of this range, and a lower torque limit, which is the lower limit of this range, are stored in the memory. The upper torque limit may be suitably set from a viewpoint of preventing the differential speed generating mechanism 25 from being overloaded due to an excessive conveyance torque. Therefore, the upper torque limit (9.0 kg-m) shown in FIG. 7 is an example and may be suitably changed in accordance with the type of the differential speed generating mechanism 25. The lower torque limit may be suitably set from a viewpoint of preventing the water content ratio of sludge from significantly falling out of a target water content ratio due to too small a conveyance torque. Therefore, the lower torque limit (5.5 kg-m) shown in FIG. 7 is an example and may be suitably changed in accordance with the type of sludge.

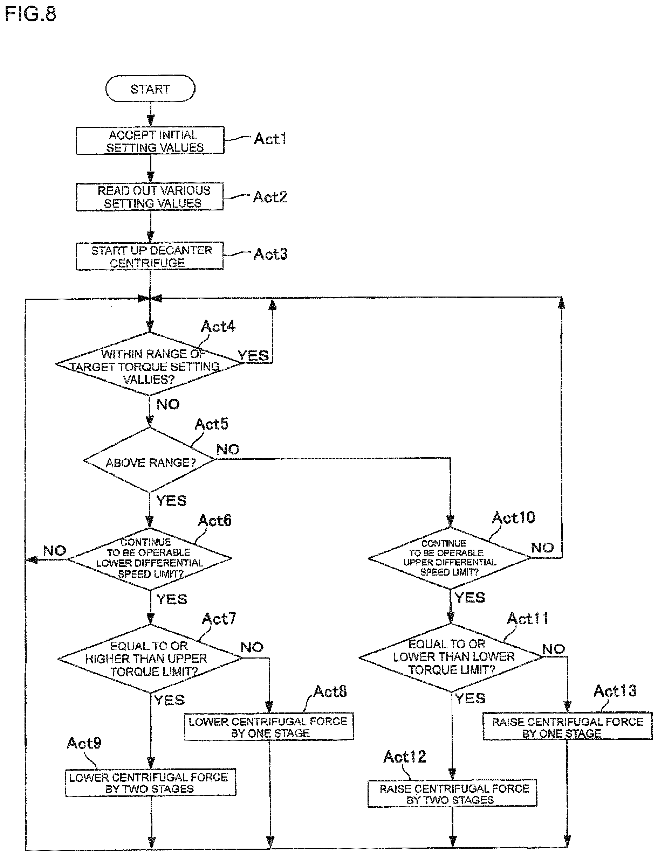

A method of centrifugal separation of sludge using the decanter centrifuge 1 will be described in detail below with reference to the flowchart of FIG. 8.

First, how the decanter centrifuge 1 is started up will be explained. The operator determines a target value (initial setting value) of centrifugal force (G) on the basis of the results of a preliminary analysis of the concentration of sludge to be supplied to the bowl 3. The control device 6 accepts an input of initial setting value of centrifugal force (G) by the operator (Act1). In this embodiment, it is assumed that the centrifugal force (G) is set to an initial setting value of 1000 G.

The control device 6 reads out an initial setting value (target value) of rotational speed (N) and various setting values of differential speed (ΔN) corresponding to the initial setting value of centrifugal force (G) from the memory (Act2). The rotational speed (N) corresponding to an initial setting value of centrifugal force (G) of 1000 G is 1417 min⁻¹, and the operable differential speed range is 2.8 to 4.0 min⁻¹.

The control device 6 starts up the drive motor 24, and when the initial setting value of rotational speed (N) of the bowl 3 of 1417 min⁻¹ is reached, it starts to supply sludge and coagulant into the bowl 3 (Act3).

The sludge and coagulant supplied into the bowl 3 are mixed inside the bowl 3 and centrifugal forces are applied by the rotating bowl 3. Thereby, solid materials in the sludge deposit on the inner circumferential surface of the bowl 3, separate from the liquid, and are discharged to the outside of the bowl 3 by the rotating screw conveyor 4 that follows after the bowl 3, and meanwhile the clarified liquid overflows from the bowl 3 and is thus discharged to the outside of the bowl 3.

After a predetermined time (of, for example, about 15 min) after the start-up of the drive motor 24, such operation of centrifugal separation of sludge is stabilized. The control device 6 monitors the conveyance torque of the screw conveyor 4 output by the torque meter all the time. The control device 6 also detects the rotational speed of the screw conveyor 4 from the inverter information (such as frequency) of the inverter-controlled back drive motor 27. Note, the control device 6 may obtain the rotational speed of the screw conveyor 4 from a speedometer (not shown) that detects the rotational speed of the rotating shaft 25a of the differential speed generating mechanism 25. The method of detecting the rotational speed of the bowl 3 will not be explained again.

In Act4, the control device 6 determines whether or not the torque value is within the range of target torque setting values (7.0 to 7.8 kg-m) . Here, the torque value may be an average value of torque of the screw conveyor 4 within a torque sampling time that comes at predetermined intervals (for example every 30 min) . If the torque value is not within the range of target torque setting values, the process proceeds to Act5. In Act5, the control device 6 determines whether or not the torque value is higher than the upper torque setting limit. As indicated at 1-1 and 1-2 in FIG. 6(A), if the torque value is higher than the upper torque setting limit (Act5: YES), the process proceeds to Act6. If the torque value is lower than the lower torque setting limit (Act5: NO), the process proceeds to Act10.

In Act6, if the differential speed (ΔN) continues to be an operable lower differential speed limit for a predetermined period of time (Act6: YES), the process proceeds to Act7. Namely, if, under the condition wherein the torque value exceeds the upper torque setting limit, the differential speed (ΔN) does not change from the operable lower differential speed limit for a predetermined period of time, it is assumed that control of differential speed (ΔN) (i.e., differential speed control by the back drive motor 27) has reached its limit, and the process proceeds to Act7.

In Act7, the control device 6 determines whether or not the torque value is equal to or higher than the upper torque limit. If the torque value is equal to or higher than the upper torque limit (Act7: YES), the process proceeds to Act9. If the torque value is not equal to or higher than the upper torque limit (Act7: NO), the process proceeds to Act8.

In Act9, the control device 6 performs a process of lowering the centrifugal force (G) by two stages. Namely, if the torque value is equal to or higher than the upper torque limit, there is a possibility that compression of sludge will be excessive and a target water content ratio may not be maintained, as well as that the differential speed generating mechanism 25 will be overloaded, and therefore the centrifugal force (G) is lowered by two stages to swiftly discharge solids to the outside of the decanter centrifuge 1.

More specifically, if the differential speed (ΔN) continues to be the operable lower differential speed limit for 20 minutes (by way of example) (Act6: YES), and if, as indicated at 1-2 in FIG. 6(A), the torque value is equal to or higher than the upper torque limit (9.0 kg-m) (Act7: YES), the control device 6 reads out from the memory a centrifugal force (G) that is lower by two stages than the current centrifugal force (G) to lower the setting value for the magnitude of centrifugal force (G) by two stages from 1000 G to 800 G. The control device 6 also reads out various values for the number of rotation (N) and differential speed (ΔN) corresponding to the new setting value of the centrifugal force (G) from the memory. The control device 6 drives the decanter centrifuge 1 on the basis of these new, various read-out setting values including the setting value of the magnitude of centrifugal force (G).

In Act8, the control device 6 performs a process of lowering the centrifugal force (G) by one stage. Namely, if the torque value is higher than the upper torque setting limit and lower than the upper torque limit, there is a possibility that compression of sludge will be excessive and a target water content ratio may not be maintained, and therefore the centrifugal force (G) is lowered by one stage to swiftly discharge solids to the outside of the decanter centrifuge 1. The condition of time duration in which the differential speed (ΔN) continues to be the operable lower differential speed limit may be changed depending on whether the magnitude of the centrifugal force (G) is lowered by one stage, or it is lowered by two stages.

More specifically, if the differential speed (ΔN) continues to be the operable lower differential speed limit for 30 minutes (by way of example) (Act6: YES), and if, as indicated at 1-1 in FIG. 6 (A), the torque value is higher than the upper torque setting limit and lower than the upper torque limit (Act7: NO), the control device 6 reads out from the memory a centrifugal force (G) that is lower by one stage than the current centrifugal force (G) to lower the setting value for the magnitude of centrifugal force (G) by one stage from 1000 G to 900 G. The control device 6 also reads out various values for the number of rotation (N) and differential speed (AN) corresponding to the new setting value of the centrifugal force (G) from the memory. The control device 6 drives the decanter centrifuge 1 on the basis of these new, various read-out setting values including the setting value of the magnitude of centrifugal force (G).

When the control device 6 changes various setting values relating to the rotational speed (N) and differential speed (ΔN) to new ones to perform operation under a changed centrifugal force (G), it is preferable to stop sludge supply for about 5 minutes before the operation. This is because the drive motor 24 may stop abnormally due to an overload.

In Act6, if the differential speed (ΔN) does not continue to be the operable lower differential speed limit for a predetermined time (Act6: NO), it can be assumed that the torque value has fallen within the range of target setting values by the control of differential speed (ΔN), so that the process returns to Act4 without lowering the centrifugal force (G).

More specifically, if the differential speed (ΔN) changes from the operable lower differential speed limit within a predetermined time period as indicated at 1-3 in FIG. 6(B), the control device 6 can control the torque value to fall within the range of target torque setting values that are lower than the upper torque setting limit as indicated at 1-3 in FIG. 6 (A) by the control of differential speed (ΔN), so that the magnitude of centrifugal force (G) is not changed and operation is carried on.

As described above, in this embodiment, if the torque value is higher than the upper torque setting limit and the differential speed (ΔN) continues to be the operable lower differential speed limit for a predetermined period of time, the level of changing the centrifugal force (G) can be altered in accordance with the torque value, so that sludge can be treated stably and overload of the differential speed generating mechanism 25 can be prevented.

Referring back to the flowchart of FIG. 8, in Act10, if the differential speed (ΔN) continues to be an operable upper differential speed limit for a predetermined period of time or longer (Act10: YES), the process proceeds to Act11. Namely, if, under the condition wherein the torque value is lower than the lower torque setting limit, the differential speed (ΔN) does not change from the operable upper differential speed limit for a predetermined period of time, it is assumed that control of differential speed (ΔN) (i.e., differential speed control by the back drive motor 27) has reached its limit, and the process proceeds to Act11.

In Act11, the control device 6 determines whether or not the torque value is equal to or lower than the lower torque limit. If the torque value is equal to or lower than the lower torque limit (Act11: YES), the process proceeds to Act12. If the torque value is not equal to or lower than the lower torque limit (Act11: NO), the process proceeds to Act13.

In Act12, the control device 6 performs a process of raising the centrifugal force (G) by two stages. Namely, if the torque value is equal to or lower than the lower torque limit, there is a possibility that the water content ratio of the sludge will be largely different from a target water content ratio, so that the centrifugal force (G) is raised by two stages to accelerate compression.

More specifically, if the differential speed (ΔN) continues to be the operable upper differential speed limit for 15 minutes (by way of example) (Act10: YES), and if, as indicated at 2-2 in FIG. 6(A), the torque value is lower than the lower torque limit (5.5 kg-m) (Act11: YES), the control device 6 reads out from the memory a centrifugal force (G) that is higher by two stages than the current centrifugal force (G) to raise the setting value for the magnitude of centrifugal force (G) by two stages from 1000 G to 1200 G. The control device 6 also reads out various setting values for the number of rotation (N) and differential speed (ΔN) corresponding to the new setting value of the centrifugal force (G) from the memory. The control device 6 drives the decanter centrifuge 1 on the basis of these new, various read-out setting values including the setting value of the magnitude of centrifugal force (G).

In Act13, the control device 6 performs a process of raising the centrifugal force (G) by one stage. Namely, if the torque value is higher than the lower torque limit and lower than the lower torque setting limit, it means that compression of sludge is insufficient, so that the centrifugal force (G) is raised only by one stage to accelerate compression. The condition of time duration in which the differential speed (ΔN) continues to be the operable upper differential speed limit may be changed depending on whether the magnitude of the centrifugal force (G) is raised by one stage, or it is raised by two stages.

More specifically, if the differential speed (ΔN) continues to be the operable upper differential speed limit for 15 minutes (by way of example) (Act10: YES), and if, as indicated at 2-1 in FIG. 6(A), the torque value is higher than the lower torque limit and lower than the lower torque setting limit (Act11: NO), the control device 6 reads out from the memory a centrifugal force (G) that is higher by one stage than the current centrifugal force (G) to raise the setting value for the magnitude of centrifugal force (G) by one stage from 1000 G to 1100 G. The control device 6 also reads out various values for the number of rotation (N) and differential speed (ΔN) corresponding to the new setting value of the centrifugal force (G) from the memory. The control device 6 drives the decanter centrifuge 1 on the basis of these new, various read-out setting values including the setting value of the magnitude of centrifugal force (G).

In Act10, if the differential speed (ΔN) does not continue to be the operable upper differential speed limit for a predetermined period of time (Act10: NO), it can be assumed that the torque value has fallen within the range of target setting values by the control of differential speed (ΔN), so that the process returns to Act4 without raising the centrifugal force (G).

More specifically, if the differential speed (ΔN) changes from the operable upper differential speed limit within a predetermined time period as indicated at 2-3 in FIG. 6(B), the control device 6 can control the torque value to fall within the range of target torque setting values that are higher than the lower torque setting limit as indicated at 2-3 in FIG. 6 (A) by the control of differential speed (ΔN), so that the magnitude of centrifugal force (G) is not changed and operation is carried on.

As described above, in this embodiment, if the torque value is lower than the lower torque setting limit and the differential speed (ΔN) continues to be the operable upper differential speed limit for a predetermined period of time, the level of changing the centrifugal force (G) can be altered in accordance with the torque value, so that sludge can be treated stably.

While the level of changing the centrifugal force (G) is altered in accordance with the torque value in this embodiment, the present invention is not limited to this. For example, if the differential speed (N) continues to be the operable lower differential speed limit for a predetermined period of time and if the torque value is higher than the upper torque setting limit, the level of the centrifugal force (G) may always be lowered by one stage irrespective of the torque value. Also, if the differential speed (N) continues to be the operable upper differential speed limit for a predetermined period of time and if the torque value is lower than the lower torque setting limit, the level of the centrifugal force (G) may always be raised by one stage irrespective of the torque value.

### Reference Signs List

- 1: decanter centrifuge
- 2: casing
- 3: bowl
- 4: screw conveyor
- 5: feed nozzle
- 6: control device

## Claims

1. A centrifugal separation device comprising: a bowl (3) for separating solids from a liquid to be treated by applying a centrifugal force; a screw conveyor (4) for conveying the solids inside the bowl toward a discharge port; a drive motor (24) for rotating the bowl; and a differential speed generating device (25) for rotating the screw conveyor at a differential speed relative to the bowl,
the centrifugal separation device **characterized by** comprising a control device (6) having information on a range of target torque setting values of conveyance torque corresponded to target water content ratios, and information on a range of operable differential speeds between the screw conveyor (4) and the bowl (3) that is necessary for causing the conveyance torque to fall within the range of target torque setting values, wherein, when the conveyance torque during execution of centrifugal separation is out of the range of target torque setting values and when the differential speed continues to be an operable upper differential speed limit or an operable lower differential speed limit, which are boundary values of the range of operable differential speeds, for a predetermined period of time, the control device (6) changes a magnitude of centrifugal force of the bowl stepwise upward or downward so that the conveyance torque falls within the range of target torque setting values.

2. The centrifugal separation device according to claim 1, wherein the control device has information on a range of torque limits that is wider than the range of target torque setting values, and
when the conveyance torque during execution of centrifugal separation is between an upper setting limit of the target torque setting values and an upper torque limit that is an upper limit of the torque limits and when the differential speed continues to be an operable lower differential speed limit for a predetermined period of time, the control device performs a first operation of lowering centrifugal force for lowering centrifugal force;
when the conveyance torque during execution of centrifugal separation is equal to or higher than the upper torque limit and when the differential speed continues to be an operable lower differential speed limit for a predetermined period of time, the control device performs a second operation of lowering centrifugal force for lowering centrifugal force more largely than the first operation of lowering centrifugal force;
when the conveyance torque during execution of centrifugal separation is between a lower setting limit of the target torque setting values and a lower torque limit that is a lower limit of the torque limits and when the differential speed continues to be an operable upper differential speed limit for a predetermined period of time, the control device performs a first operation of raising centrifugal force for raising centrifugal force; and
when the conveyance torque during execution of centrifugal separation is equal to or lower than the lower torque limit and when the differential speed continues to be an operable upper differential speed limit for a predetermined period of time, the control device performs a second operation of raising centrifugal force for raising centrifugal force more largely than the first operation of raising centrifugal force.

3. The centrifugal separation device according to claim 1 or 2, wherein the range of operable differential speeds is set correspondingly to each stage of centrifugal force that is changed stepwise and wherein, when the control device changes the magnitude of centrifugal force of the bowl stepwise, the control device sets an operable upper differential speed limit and an operable lower differential speed limit corresponding to a changed centrifugal force of the bowl.

4. The centrifugal separation device according to any one of claims 1 to 3, wherein the control device executes control of stopping supply of the liquid to be treated to the bowl after starting an operation of raising the centrifugal force of the bowl until the changed centrifugal force is reached.

## Patentansprüche

1. Zentrifugalabscheidungsvorrichtung mit:
einer Trommel (3) zum Abscheiden von Feststoffen aus einer zu behandelnden Flüssigkeit durch Ausüben einer Zentrifugalkraft;
einem Schneckenförderer (4) zum Befördern der Feststoffe innerhalb der Trommel zu einer Auslassöffnung;
einem Antriebsmotor (24) zum Drehen der Trommel; und
eine Geschwindigkeitsunterschied-Erzeugungsvorrichtung (25) zum Drehen des Schneckenförderers mit einer Differenzgeschwindigkeit relativ zur Trommel,
wobei die Zentrifugalabscheidungsvorrichtung **dadurch gekennzeichnet ist, dass** sie eine Steuervorrichtung (6) aufweist, die über Information über einen Bereich von Solldrehmomenteinstellwerten eines Förderdrehmoments, die Sollwassergehaltsverhältnissen entsprechen, und Information über einen Betriebsfähigkeitsbereich der Differenzgeschwindigkeiten zwischen dem Schneckenförderer (4) und der Trommel (3) verfügt, die notwendig sind, um zu bewirken, dass das Förderdrehmoment in den Bereich der Solldrehmomenteinstellwerte fällt, wobei, wenn das Förderdrehmoment während der Ausführung der Zentrifugalabscheidung außerhalb des Bereichs der Solldrehmomenteinstellwerte liegt und wenn die Differenzgeschwindigkeit für eine vorgegebene Zeitspanne weiterhin auf einer Betriebsfähigkeitsobergrenze der Differenzgeschwindigkeiten oder einer Betriebsfähigkeitsuntergrenze der Differenzgeschwindigkeiten liegt, die Grenzwerte des Betriebsfähigkeitsbereichs der Differenzgeschwindigkeiten sind, die Steuervorrichtung (6) eine Größe der Zentrifugalkraft der Trommel schrittweise aufwärts oder abwärts ändert, so dass das Förderdrehmoment in den Bereich der Solldrehmomenteinstellwerte fällt.

2. Zentrifugalabscheidungsvorrichtung nach Anspruch 1, wobei die Steuervorrichtung über Information über einen Bereich der Drehmomentgrenzen verfügt, der breiter als der Bereich der Solldrehmomenteinstellwerte ist, und
wenn das Förderdrehmoment während der Ausführung der Zentrifugalabscheidung zwischen einer Einstellobergrenze der Solldrehmomenteinstellwerte und einer Drehmomentobergrenze liegt, die eine Obergrenze der Drehmomentgrenzen ist, und wenn die Differenzgeschwindigkeit für eine vorgegebene Zeitspanne weiterhin auf einer Betriebsfähigkeitsuntergrenze der Differenzgeschwindigkeiten liegt, die Steuervorrichtung eine erste Operation einer Senkung der Zentrifugalkraft zum Senken der Zentrifugalkraft durchführt;
wenn das Förderdrehmoment während der Ausführung der Zentrifugalabscheidung gleich oder höher als die Drehmomentobergrenze ist und wenn die Differenzgeschwindigkeit für eine vorgegebene Zeitspanne weiterhin auf einer Betriebsfähigkeitsuntergrenze der Differenzgeschwindigkeiten liegt, die Steuervorrichtung eine zweite Operation einer Senkung der Zentrifugalkraft zum stärkeren Senken der Zentrifugalkraft als die erste Operation der Senkung der Zentrifugalkraft durchfuhrt;
wenn das Förderdrehmoment während der Ausführung der Zentrifugalabscheidung zwischen einer Einstelluntergrenze der Solldrehmomenteinstellwerte und einer Drehmomentuntergrenze liegt, die eine Untergrenze der Drehmomentgrenzen ist, und wenn die Differenzgeschwindigkeit für eine vorgegebene Zeitspanne weiterhin auf einer Betriebsfähigkeitsobergrenze der Differenzgeschwindigkeiten liegt, die Steuervorrichtung eine erste Operation einer Erhöhung der Zentrifugalkraft zum Erhöhen der Zentrifugalkraft durchführt; und
wenn das Förderdrehmoment während der Ausführung der Zentrifugalabscheidung gleich oder niedriger als die Drehmomentuntergrenze ist und wenn die Differenzgeschwindigkeit für eine vorgegebene Zeitspanne weiterhin auf einer Betriebsfähigkeitsobergrenze der Differenzgeschwindigkeiten liegt, die Steuervorrichtung eine zweite Operation einer Erhöhung der Zentrifugalkraft zum stärkeren Erhöhen der Zentrifugalkraft als die erste Operation der Erhöhung der Zentrifugalkraft durchführt.

3. Zentrifugalabscheidungsvorrichtung nach Anspruch 1 oder 2, wobei der Betriebsfähigkeitsbereich der Differenzgeschwindigkeiten entsprechend jeder Stufe der Zentrifugalkraft eingestellt wird, die schrittweise geändert wird, und wobei, wenn die Steuervorrichtung die Größe der Zentrifugalkraft der Trommel schrittweise ändert, die Steuervorrichtung eine Betriebsfähigkeitsobergrenze der Differenzgeschwindigkeiten und eine Betriebsfanigkeitsuntergrenze der Differenzgeschwindigkeiten entsprechend einer geänderten Zentrifugalkraft der Trommel einstellt.

4. Zentrifugalabscheidungsvorrichtung nach einem der Ansprüche 1 bis 3, wobei die Steuervorrichtung eine Steuerung des Stoppens der Zufuhr der zu behandelnden Flüssigkeit zur Trommel nach dem Starten einer Operation einer Erhöhung der Zentrifugalkraft der Trommel durchführt, bis die geänderte Zentrifugalkraft erreicht ist.

## Revendications

1. Dispositif de séparation centrifuge comprenant : une cuve (3) pour séparer des solides d'un liquide à traiter en appliquant une force centrifuge ; un transporteur à vis (4) pour transporter les solides à l'intérieur de la cuve vers un orifice de décharge ; un moteur d'entraînement (24) pour faire tourner la cuve ; et un dispositif de génération de vitesse différentielle (25) pour faire tourner le transporteur à vis à une vitesse différentielle par rapport à la cuve,
le dispositif de séparation centrifuge étant **caractérisé en ce qu'**il comprend un dispositif de commande (6) ayant l'information concernant une plage de valeurs de réglage de couple cible du couple de transport correspondant aux rapports de teneur en eau cible, et une information concernant une plage de vitesses différentielles de fonctionnement entre le transporteur à vis (4) et la cuve (3) qui est nécessaire pour amener le couple de transport à chuter dans la plage de valeurs de réglage de couple cible, dans lequel, lorsque le couple de transport, pendant l'exécution de la séparation centrifuge, est hors de la plage de valeurs de réglage de couple cible et lorsque la vitesse différentielle continue à être une limite de vitesse différentielle supérieure de fonctionnement ou une limite de vitesse différentielle inférieure de fonctionnement, qui sont des valeurs de limite de la plage de vitesses différentielles de fonctionnement, pendant une période prédéterminée de temps, le dispositif de commande (6) change une grandeur de force centrifuge de la cuve progressivement vers le haut ou vers le bas de sorte que le couple de transport chute dans la plage des valeurs de réglage de couple cible.

2. Dispositif de séparation centrifuge selon la revendication 1, dans lequel le dispositif de commande a l'information concernant une plage de limites de couple qui est plus large que la plage de valeurs de réglage de couple cible, et
lorsque le couple de transport pendant l'exécution de la séparation centrifuge est entre une limite de réglage supérieure des valeurs de réglage de couple cible et une limite de couple supérieure qui est une limite supérieure des limites de couple et lorsque la vitesse différentielle continue à être une limite de vitesse différentielle inférieure de fonctionnement pendant une période prédéterminée de temps, le dispositif de commande réalise une première opération d'abaissement de la force centrifuge pour abaisser la force centrifuge ;
lorsque le couple de transport, pendant l'exécution de la séparation centrifuge est égal ou supérieur à la limite de couple supérieure et lorsque la vitesse différentielle continue à être une limite de vitesse différentielle inférieure pendant une période prédéterminée de temps, le dispositif de commande réalise une seconde opération d'abaissement de la force centrifuge pour abaisser nettement plus la force centrifuge que la première opération d'abaissement de la force centrifuge ;
lorsque le couple de transport, pendant l'exécution de la séparation centrifuge est entre une limite de réglage inférieure des valeurs de réglage de couple cible et une limite de couple inférieure qui est une limite inférieure des limites de couple et lorsque la vitesse différentielle continue à être une limite de vitesse différentielle supérieure de fonctionnement pendant une période prédéterminée de temps, le dispositif de commande réalise une première opération d'augmentation de la force centrifuge pour augmenter la force centrifuge ; et
lorsque le couple de transport, pendant l'exécution de la séparation centrifuge est égal ou inférieur à la limite de couple inférieure et lorsque la vitesse différentielle continue à être une limite de vitesse différentielle supérieure de fonctionnement pendant une période prédéterminée de temps, le dispositif de commande réalise une seconde opération d'augmentation de la force centrifuge pour augmenter nettement plus la force centrifuge que la première opération d'augmentation la force centrifuge.

3. Dispositif de séparation centrifuge selon la revendication 1 ou 2, dans lequel la plage de vitesses différentielles de fonctionnement est déterminée de manière correspondante à chaque étage de force centrifuge qui est modifiée progressivement et dans lequel, lorsque le dispositif de commande change la grandeur de la force centrifuge de la cuve progressivement, le dispositif de commande règle une limite de vitesse différentielle supérieure de fonctionnement et une limite de vitesse différentielle inférieure de fonctionnement correspondant à une force centrifuge modifiée de la cuve.

4. Dispositif de séparation centrifuge selon l'une quelconque des revendications 1 à 3, dans lequel le dispositif de commande exécute la commande d'arrêt de l'alimentation du liquide à traiter dans la cuve, après le démarrage d'une opération d'augmentation de la force centrifuge de la cuve jusqu'à ce que la force centrifuge modifiée ait été atteinte.
